# EUROPEAN PATENT SPECIFICATION

(11) **EP 4 299 488 B1**
(45) Date of publication and mention of the grant of the patent: **25.06.2025**
(21) Application number: 23174308.9
(22) Date of filing: 19.05.2023
(51) Int. Cl.: B65G 47/08, B65G 47/53, B65G 47/71, B65G 47/76, B65G 47/82, B65G 47/88, B65G 21/20

(54) **DEVICE AND METHOD FOR GUIDING AND ARRANGING OF PRODUCTS IN THE FOOD INDUSTRY ON A CONVEYOR BELT**
VORRICHTUNG UND VERFAHREN ZUM FÜHREN UND ANORDNEN VON PRODUKTEN IN DER LEBENSMITTELINDUSTRIE AUF EINEM FÖRDERBAND
DISPOSITIF ET MÉTHODE DE GUIDAGE ET D'AGENCEMENT DE PRODUITS DE L'INDUSTRIE ALIMENTAIRE SUR UNE BANDE TRANSPORTEUSE

(30) Priority: 30.06.2022 BE 202205532
(43) Date of publication of application: 03.01.2024
(73) Proprietor: GB Foods Belgium, 2870 Puurs, Sint-Amands (BE)
(72) Inventor: SANCHO, Félix, 1200 Woluwe Saint Lambert (BE); DEKKER, Bernardus Martinus, 2804 HZ Gouda (NL)
(74) Representative: Nederlandsch Octrooibureau

(56) References cited:
- BE-A3- 1 015 777
- CN-A- 111 960 066
- JP-A- 2003 020 117
- JP-A- H06 321 344
- US-A1- 2004 200 696
- US-B2- 7 980 381

## Description

### Technical Scope

The current invention involves the automating of an industrial process, preferably in the food industry, and more specifically a device and method for guiding and arranging products on a conveyor belt.

### State of the Art of Technology

A conveyor belt, also called a belt transport system, is used to transport products from a first location to a second location in an industrial environment. This automates the task of moving products between various locations and in this way, reduces the general labor intensity of an industrial process.

The use of a conveyor belt is known, and is used in a variety of industrial sectors, such as the automobile industry, package delivery services, the bulk industry and also the food industry.

When used in the food industry, in addition to the legal requirements of traceability, safety and health, other aspects are of significant importance for running the production process efficiently and with cost savings. One important aspect is the safe packaging and arranging of food products for further transport to distribution centers, restaurants and cafés and/or to supermarkets for direct sale.

In EP0552729A2, a device and method was published for the sorting and arranging of food items. In this, these items are first placed horizontally next to each other and then stacked for further transport.

In EP0876957A1, a device and method are published for the arranging and lining up of products in rows and columns to then move them to be picked up for further transport.

US 7980381 B2 discloses a device according to the preamble of claim 1 as well as a method for guiding food products in a production process using said device. In JP2003020117A, a method was published for lining up food products and packaging them in boxes.

A disadvantage of these published methods is, however, that such arrangements can lead to an unstable stacking of products, as will be shown below. In addition, such arrangements do not ensure efficient and optimal use of the required or available space for further transport.

It is thus the objective of the current invention to provide a device and method for guiding and arranging finished products from the food industry that overcome the described disadvantages of solutions from the state of the art of technology. More specifically, it is the objective of the current invention to provide a device and method that leads to a stable and space-saving arrangement of products, wherein these ordered and stacked products are suitable for further transport.

### Summary of the invention

According to the current invention, the objective described above is realized by providing a device for guiding products on a conveyor belt as defined by claim 1, the device comprising: a first feed line configured to feed the products in a first direction, and a splitter set up in the first direction along the first feed line, such that the first feed line is split into first and second distinct paths. The splitter comprises a movable arm. The arm is movable according to a translation according to the named first direction. The movable arm is configured to guide the products into the first and second distinct paths. In addition, the movable arm is further configured to move so that a speed` of a translation movement according to a first sense along the first direction and equal to the sense of the conveyance of the products is greater than the speed of a translation movement counter to said first sense.

The current invention is described with the use of certain terms or definitions. "Direction" defines in which (conceivable) line movement can take place, while "sense" refers to which side of this line indicated by the direction movement takes place.

The device comprises a first feed line, along which the products are delivered, such as by a distributor located further up in the industrial process. The products are finished or semifinished products from the food industry in the sense that they are suitable to be transported on a conveyor belt. The products include, for example, jars or cups of glass, metal, paper or any other material suitable for packaging foodstuffs. Usually, the products also contain closed packaging so that they can be further processed in an automated manner.

Products are also understood to be so-called "wet" products, for example sauces, such as mayonnaise and/or mustard, bouillon, such as poultry and/or chicken bouillon, or soups.

The dimensions of the products vary depending on their content, but range from glass jars with a diameter of between 6 cm to 7.5 cm and a height varying from 12 cm to 16 cm. Also note that these dimensions are not limiting. The width of the first feed line and that of the paths is adjusted to the dimensions of the products. This means that the device is suitable for a range of products.

The frequency and speed at which the products are fed onto the first feed line is consistent with a frequency and speed common in an industrial automated process in the food industry and are adjusted to both the devices upstream in the industrial process as well as other devices after the device of the invention for further processing. The frequency and speed thus do not form a technical limitation regarding the current invention.

The device also comprises a splitter connected to the first feed line of the conveyor belt. The splitter can be seen as a mechanical distributor or a mechanical separator. It must further be understood that the term splitter is not to be considered limited, but indicates the function of the splitter, namely the splitting of the first feed line into two different paths, a first path and a second path. That is why the splitter is set up according to the direction of the first feed line, preferably in the middle of it. According to this direction and in the sense of the movement of the products, the conveyor belt will include in sequence the first feed line, the splitter and then the two distinct paths. The delivered products will then be individually distributed from the first feed line to the first or the second path. In other words, it is not an individual product that will be split, but a group of products that are distributed to the first path on the one hand or the second path on the other. The distribution among both paths occurs arbitrarily or randomly, as will be explained later.

According to 1 the invention, the splitter comprises a movable arm that moves in the set direction of the feed of the products. In other words, the arm moves in a direction parallel to the first feed line. It must further be understood that the first feed line, or at least part of it, follows a straight line. The arm can then move in this straight line.

Products are deposited on the conveyor belt via the first feed line and then move toward the splitter. Through the movement of the movable arm of the splitter, the products are forced onto either the first path or the second path. Another advantage is that through the movement of the splitter, jams or obstructions of the products are prevented. In other words, the movable arm ensures that the production process remains running optimally and efficiently using the conveyor belt. Because the products are guided into two distinct paths, the further processing or treatment can occur in an optimal manner, as will be explained below.

According to the invention, the movable arm moves in the sense of the feed of the products at a speed that is higher than the speed in the other sense, so opposite to the movement of the product. This creates an impulse movement of the movable arm. In addition, through the lower speed in the sense opposite to that of the sense in which the products are moving, the chance of damage to the products when the arm touches the products is reduced. Furthermore, the speed at which the arm moves in the sense of the movement of the products can be the same as the speed of the conveyor belt. In this way, a drive device for both the conveyor belt and the movable arm can be used, wherein in the other direction, the movement is passive, such as through tensing and relaxing a spring.

Preferably, the movable arm comprises a rounded end on the end of the sense opposite to that of the movement of the products, preferably made of polymerized polytetrafluoroethylene, also called PFTE or under the brand name Teflon. This further reduces the chance of damage to the products when the arm touches the products.

In addition, the width of the first and second paths can be the same as the width of the products. In other words, the device according to this embodiment is adjusted to the type of product and more specifically to the dimensions of the packaging.

In addition to the movable arm, the device also comprises, according to a preferential embodiment, a lever set up on the edge of the first feed line, so in a position before the splitter in the production process. This lever is hinged on this edge and can hinge between the direction the products are following on the conveyor belt on the one hand, and perpendicular to this in an area determined by the bearing surface of the conveyor belt. In other words, the lever can hinge between a direction parallel to the direction of the first feed line, and in a perpendicular direction to this to the products when they pass by. The lever is further configured to guide the products to the splitter. Because the splitter is configured to guide the products into the first or second path, as a result, the splitter is in the middle of the first feed line as already explained, and at the end of it. When the products reach the edge of the first feed line, the lever ensures that the products are guided into the middle, thus to the splitter. This also enables the products to be more optimally distributed over the two paths, because through this, this chance is increased in comparison with a situation in which the majority of the products are located on only one side.

Guiding the products by the lever is done using a slim arm that also contains PFTE. In addition, the length of this arm is smaller than the width of the first feed line, and preferably half of this, or even smaller. This ensures that the lever itself is not an obstruction but just slides the products at the edge wherein the lever is to the middle of the first feed line.

Furthermore, the lever is preferably set up on an edge in line with a possible outer curve of an upstream section of the conveyor belt in terms of the production process. In other words, when the product for the first feed line are delivered via the conveyor belt that comprises a curve or turn, the lever is set up on the edge running to the outer since or outer edge of this curve or turn.

In addition, the hinge point of the lever is set up such that the direction of rotation of the first direction to the second direction is a positive direction of rotation to a first sense. Formulated otherwise, when the slim arm moves from the edge to the middle of the first feed line, this is away from the splitter and thus opposite the sense of the movement of the products. Thus the chance that the lever will touch a product is greater, and the chance of obstruction by the lever is reduced.

In addition, the lever will hinge continuously and according to a certain frequency between the two positions. This frequency and associated rotational speed are adjusted to the speed at which the products are deposited on the first feed line.

Furthermore, in addition to the first feed line, the splitter and the two distinct paths, the device comprises a second feed line after and connected to the first and second paths. In other words, the second feed line lets the two distinct paths rejoin as explained further.

A blocking agent is set up on the first and second paths and serves to temporarily block the products on these paths. The block occurs in a sequential manner such that the products on the first path can be arranged with regard to those on the second path in a specific pattern. Blocking of the respective paths does not as a rule have to occur synchronously.

The blocking per path occurs in such a way that the products fed onto the second feed line, thus after the first and second paths, follow a staggered pattern. A staggered pattern means that the products on the first path are set transverse with regard to the products on the second path. In other words, this means that an imaginary area through a middle point or mid-line of a product on the first path coincides with the edge of a product on the second path.

The advantage of this staggered set-up is that on the one hand, space can be saved during transport, such as if the products are round in shape. On the other hand, the products can be arranged in a stable and safer manner and can be stacked as will be explained further.

In addition, the blocking agent is configured in such a way to initiate the blocking of products on the respective paths after a pre-defined number of products per respective paths have passed along the blocking agent, or at least along one side thereof. Through this, a regulated and controlled quantity of products are first staggered to then be moved to the second feed line.

Blocking the products can thus as a result occur separately by path, because the transport of products from the first feed line and then per path may differ. The blocking agent will allow a previously defined number of products through per path, and will block a path if necessary and after the correct number of products have been allowed through on the other path, will block this path too. In order to have a correct number of products per path, one can use an electric eye wherein the number of products can be counted.

Preferably, the pre-defined number of products are allowed through for one path one unit more than the pre-defined number for the other path. The advantage of this is that one can perform stacking and ordering of the products further in the production process through the staggered pattern and save space.

In addition, the device according to an embodiment comprises a third feed line set up transverse to the second feed line and a slider that slides in the direction of the third feed line, and wherein the slider is configured to slide the products on the second feed line to the third feed line according to the staggered pattern.

When products are stacked in a staggered pattern on the second feed line, this are then slid over to a third feed line. The sliding will take place sequentially, so again when a correct number of products are stacked on the second feed line, and then slid to the products already slid onto the third feed line. This is repeated until preferably there are as many rows stacked as the pre-defined number of products for the first path, so the highest value for the respective paths. In this way, one achieves a number of stacked products in a staggered pattern for further processing.

The advantage of these staggered stacked products is that on one hand, space is saved with regard to completely symmetrically stacked products, in particular when the products are round or spherical.

On the other hand, such a configuration is also much more stable and more secure compared to configurations as known from the state of the art of technology, and this is when these are configured completely symmetrically. For round or spherical products in a symmetrical configuration, forces from neighboring products are distributed on four different locations for products that are not at the edge, while in a staggered pattern, the forces can be distributed over six contact points.

According to the invention, use of the device according to the first aspect of the invention is published as defined in claim 11. In the use of the device, the products are ordered according to a staggered pattern, wherein the number of rows of the staggered pattern is equal to the number of products delivered via the first path, so the previously defined number for the first path.

According to the invention, a procedure is published for guiding products on a conveyor belt as defined by claim 12, the procedure comprising the steps of guiding the products according to a first supply line, and the splitting of the products to a first and second different path respectively, and the temporary and sequential blocking of the products in the first and second paths respectively such that the products are conveyed on a second supply line according to a staggered pattern.

According to one embodiment, the procedure further comprises the steps of the delaying a pre-defined number of products per path on the second supply line, wherein the number of products for the first path comprises one unit more than the second path, and the shifting of the delayed products to a third supply line up to the number of rows of products shifted to the third supply line is equal to the number of products on the first path held up on the second supply line.

### Summary description of the drawings

The invention will further be illustrated with reference to the figures, wherein
Fig. 1 illustrates a top view of an embodiment of the device comprising a movable arm and a lever; and
Fig. 2 illustrates the same top view as the embodiment in Fig. 1 with an additional illustration of the two distinct paths; and
Fig. 3 illustrates a top view of an embodiment of the device comprising products delivered via the first supply line; and
Fig. 4 illustrates a side view of an embodiment of the device as illustrated in Fig. 1 to Fig. 3; and
Fig. 5A shows a blocking agent on two different paths, and Fig. 5B illustrates the same blocking agent wherein a pre-defined number of products is allowed through;
Fig. 6 illustrates the device with products ordered according to a staggered pattern ready to be moved to second supply line; and
Fig. 7 illustrates products arranged in a staggered pattern for further processing in the production process.

### Detailed description of embodiments

The current invention will be described with regard to particular embodiments and with reference to certain figures, but the invention is not limited to these and is only determined by the claims. The figures described are only schematic and non-limiting. In the figures, the size of certain element is exaggerated and not drawn to scale for illustrative purposes. The dimensions and the relative dimensions are not necessarily consistent with actual practical designs of the invention.

In addition, the terms first, second, third and the like are used in the description and claims to differentiate between similar elements and not necessarily to describe a sequential or chronological sequence. The terms are interchangeable under fitting circumstances and the embodiments of the invention can be applied in sequences other than those described or illustrated here.

In addition, the terms, top, bottom, over, under and the like in the description and claims are used for illustrative purposes and not necessarily to describe relative positions. The terms used are interchangeable under fitting circumstances and the embodiments of the invention described can be applied in other orientations than described or illustrated here.

Furthermore, the various embodiments, even though called "preferred designs" must be considered rather as a manner of example of how the invention can be designed than as a limitation of the range of the invention.

The term "encompassing", used in the claims, must not be interpreted as being limited to the resources or steps listed after it. The term does not exclude other elements or steps. The term should be interpreted as specifying for the presence of the listed features, elements, steps or components which are referenced, but does not exclude the presence or addition of one or more other features, elements, steps or components or groups thereof. The range of the expression "a design encompassing resources A and B" must thus not be limited to designs that consist only of A and B. The intention is that, with regard to the current invention, only the components A and B of the design are summarized, and the claim must be further interpreted as they also contain equivalents of these components.

The device shown in the figure is a part of a conveyor belt in a production process of the food industry and more specifically for so-called "wet" products, for example sauces, such as mayonnaise and/or mustard, bouillon such as poultry and/or chicken bouillon, or soups. The section of the conveyor belt as illustrated comprises the part wherein these products are packaged or at least partially so that they are suitable for further processing. Products include the wet product, as well as the packaging itself.

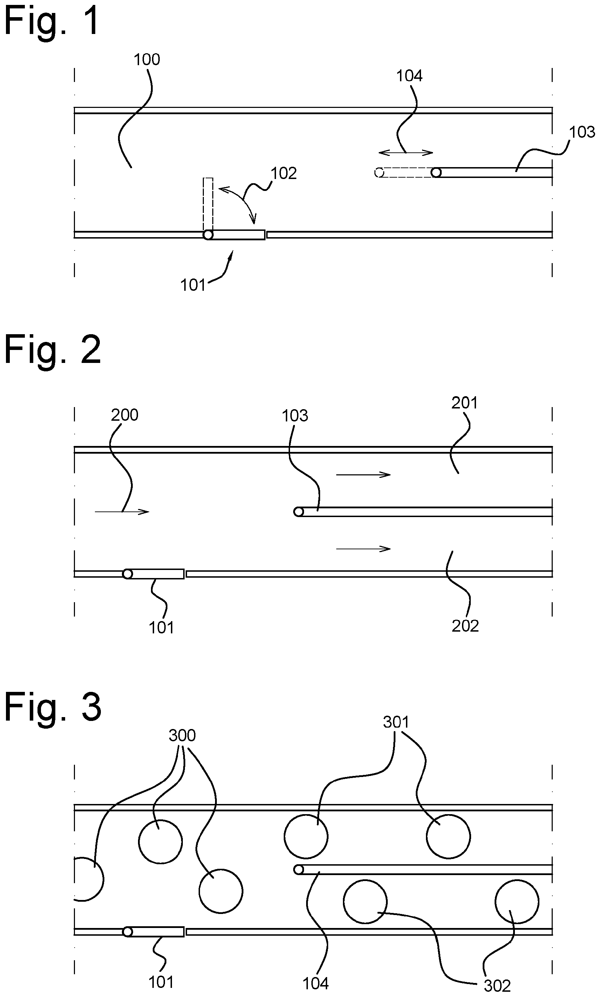

In Fig. 1, part of the conveyor belt is illustrated comprising a first supply line 100, a lever 101 and a splitter 103. Fig. 1 is a top view of the device, which is a part of the conveyor belt, as previously explained. Fig. 2 is the same top view, wherein the direction and sense along which the products are delivered are illustrated. Reference 200 shows via the arrow the direction and sense in which the products move after they are delivered upstream in the production process. This is further illustrated in Fig. 3, wherein references 300 to 302 illustrate products.

The products are illustrated have a round shape, and illustrate, for example, glass jars in which a sauce is stored for later consumption. The shape of the products may deviate from this illustrated round shape, but it must further be understood that both the device and the shape of the products are aligned in the sense that not every dimension and shape of the product is suitable for further processing by the device. On the other hand, it must be understood that the device as defined and described must not be seen as limiting in function of the dimensions of the products.

The products are delivered via the first supply line 100 according to sense and direction 200. An imaginary line parallel to the arrow 200 thus determines the direction, and the arrow 200 itself the sense as already explained above.

This is further illustrated by products 300 that are moving toward the splitter 103. Through the splitter 103, the products are divided onto the different paths 201 and 202, wherein products 301 are located on path 201 and products 302 are located on path 202.

The splitting or division of the products 300 to path 201 or 202 respectively are further optimized by the movement as illustrated by reference 104. The movable arm 103 can thus move both against and following the sense as indicated by reference 200.

There is also a hinged arm 101 at the edge of the first supply line 100. When the products are located at the edge, products are moved through the rotating movement as illustrated by reference 102 together with movement 200 toward the splitter 103.

The speed and frequency with which the movable arm 103 moves 104 and the frequencies and cornering speed with which the lever 101 turns 102 and be adjusted to the speed at which the products 300-302 are delivered via the first supply belt 100 as well as to the shape, dimensions and robustness of the packaging of the products.

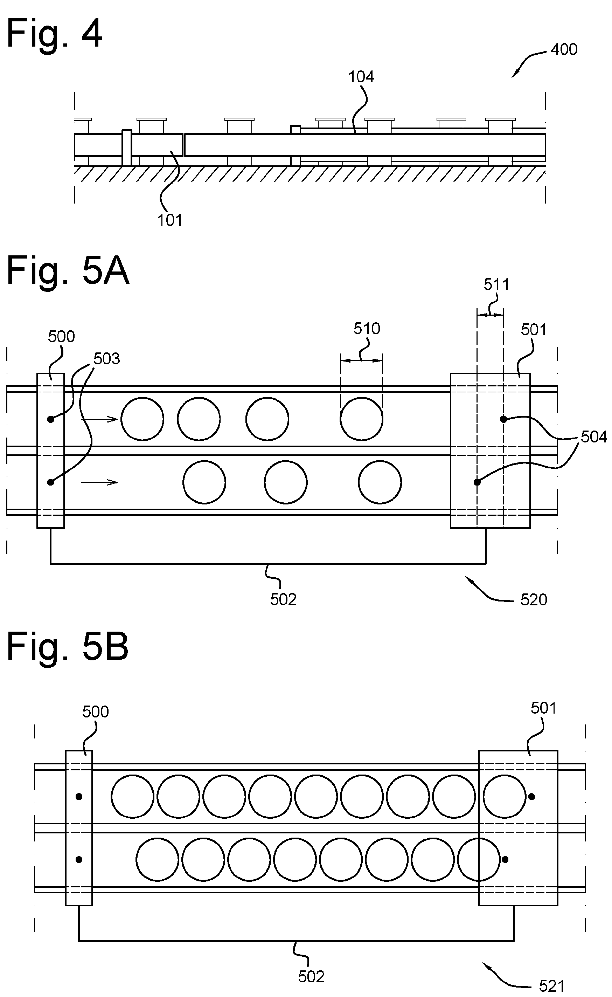

Fig. 4 illustrates a side view 400 of the device as already illustrated in figures 1 to 3. The height at which the device is set up depends on the production hall in which the production process takes place, but is not limiting the functionality of it. In addition, this height can be adjusted to operators that monitor the automated production process for a possible intervention.

Fig. 5A and 5B further illustrate the device as set up and configured in the further course of the production process. The illustrations in Fig. 5A and 5B thus are affiliated with the illustration of the figures 1 through 4. These figures illustrate a blocking agent that consists on the one hand of a first tool 500 and on the other hand a second tool 501, wherein both tools 500-501 can be controlled in a coordinated manner, as illustrated by reference 502.

Tool 500 connects to the first and second paths respectively, wherein the black circles 503 illustrate rods or stoppers that are suitable to temporarily stop products. In other words, by moving the rods 503 to the surface supporting the products, these products are temporarily blocked, while the products can be let through then the rods are lifted away from this surface.

In tool 501, such rods 504 with a similar type of function are illustrated. One must further note that the rods 504 are not located in the same transverse area on the area of the first and second path, but shifted away from each other in the sense according to the paths. This is further illustrated by reference 511. This width 511 is consistent with the distance at which rods 504 are shifted from each other and consistent with half of the width of the products 300-302. In other words, the width 510 of the products 300-302 is equal to twice the width 511. In this, one achieves a staggered pattern as illustrated in Fig. 5B.

The width 511 can be adjusted so that the device is suitable for products with another width as illustrated in these figures. One should set the width 511 between the rods to half the width of the products that are being arranged.

The products are guided on the first 201 and second 202 paths as illustrated by reference 520 until a defined number of products are stacked on each path respectively, as illustrated by reference 521.

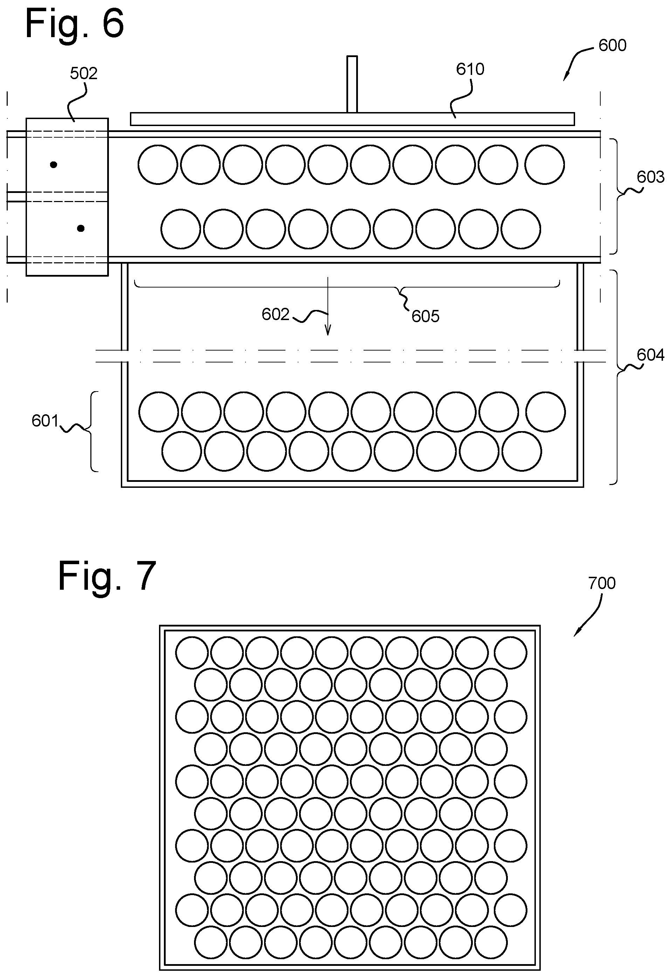

Then the products are shifted to the second supply line 603 as illustrated in Fig. 6. Through the splitter 103 and the blocking agents 500-501 in sequence, the products 300-302 are staggered and can be moved by sliders 610. Slider 610 slides 602 the products to the third supply line 604.

Sliding 602 the products to the third supply line 604, illustrated by reference 601, is repeated until so many rows are created as the previously defined number of products for the first path 201, as illustrated in Fig. 7.

The arranged products in a staggered pattern 800 can then be further processed by, for example, stacking them. Thus the further transport can occur in a secure, stable and efficient manner.

## Claims

1. Device for guiding products (300-302) on a conveyor belt, the device comprising:
- a first supply line (100) configured for the conveyance of the products (300-302) according to a first direction (200); and
- a splitter (103) set up according to the first direction (200) along the first supply line (100) such that the first supply line (100) is split into a first (201) and second (202) different path;
wherein the splitter (103) comprises a movable arm (104), said movable arm (104) being movable according to a translation according to the first listed direction (200), the movable arm (104) being configured to guide the products (300-302) into the first (201) or second (202) differentiated path,
**characterised in that** the movable arm (104) is further configured to move so that a speed of a translation movement of the movable arm (104) according to a first sense along the first direction and equal to the sense of the conveyance of the products (300-302) is greater than the speed of a translation movement of the movable arm (104) counter to said first sense.

2. Device according to claim 1, wherein the speed of the movement according to the first sense is equal to the speed of the running belt.

3. Device according to one of the previous claims, wherein the movable arm (104) comprises a rounded end, the rounded end preferably being made of polymerized polytetrafluoroethylene.

4. Device according to one of the previous claims the device further comprising a lever (101) set up on an edge of the first supply line (100), the lever (101) comprising a slim arm (102) set up to hinge between the first direction (200) and a second direction perpendicular to the first direction (200) to the first supply line (100), the lever (101) is configured to guide the products (300-302) to the splitter (103) by hinging (102) the slim arm (101) from the first direction (200) to the second direction, the slim arm (101) preferably being made of polymerized polytetrafluoroethylene.

5. Device according to claim 4, wherein the length of the slim arm (101) is smaller than the width of the first supply line (100), preferably half of the width.

6. Device according to claims 4 or 5, wherein the hinge point of the lever (101) is set up such that the direction of rotation of the first direction (200) to the second direction is a positive direction of rotation to the first sense.

7. Device according to any pussment=ewwe of the previous claims, the device further comprising:
- a second supply line (603) set up after and connecting to the first (201) and second (202) paths; and
- a blocking agent (500- 502) set up on the first (201) and the second (202) paths;
wherein that the blocking agent (500-502) is configured to block (503-504) the conveyance of the products (300-302) temporarily and sequentially per path (201-202) such that the conveyance of the products (300-302) run on the second supply line (603) according to a staggered pattern.

8. Device according to claim 7, wherein the blocking agent (500-502) is also configured to initiate the block (503-504) after a pre-defined number of products pass the blocking agent (500-502), and wherein the second supply line (603) is configured receive the pre-defined number per path and stop them.

9. Device according to claim 8, wherein the pre-defined number for the first path (201) comprises one unit more than the pre-defined number for the second (202) path.

10. Device according to any one of claims 8 to 9, the device further comprising:
- a third supply line (604) set up transverse on the second supply line (603); and
- a slider (610) movable in a direction of the third supply line (603); and
wherein the slider (610) is configured to move the products (300-302) on the second supply line (603) according to the staggered pattern (700) to the third supply line (604).

11. Use of the device according to one of the claims 8 to 10 for the arrangement of products (300-302) delivered on a conveyor belt according to a staggered pattern, wherein the number of rows of the staggered pattern is equal to the number of products delivered via the first path (201).

12. Method for guiding products (300-302) on a conveyor belt by means of the device according to claim 1, the method comprising the steps of:
- guiding the products (300-302) according to the first supply line (100); and
- splitting the products (300-302) to the first (201) and second (202) distinct paths respectively using the splitter of said device according to claim 1; and
- the temporary and sequential blocking of the products (300-302) in the first (201) and second (202) distinct paths respectively thus that the products (300-302) are conveyed on the second supply line (603) according to a staggered pattern (700).

13. Method according to claim 12, the method further comprising the conveyance of products (300-302) at the edge of the first supply line (100) to the splitter (103) using a hinged lever (101).

14. Method according to one of the claims 12 and 13, the method further comprising the repetitive execution of the steps of:
- stopping of a pre-defined number of products (300-302) per path (201-202) on the second supply line (603), wherein the number of products (300-302) for the first path (201) comprises one unit more than the second path (202); and
- the shifting of the stopped products to a third supply line (604);
until the number of rows of products is shifted to the third supply line (604) is equal to the number of products on the first path (201) stopped on the second supply line (603).

## Patentansprüche

1. Vorrichtung zum Führen von Produkten (300-302) auf einem Förderband, wobei die Vorrichtung Folgendes umfasst:
- eine erste Zuführleitung (100), die für die Beförderung der Produkte (300-302) gemäß einer ersten Richtung (200) konfiguriert ist; und
- einen Splitter (103), der gemäß der ersten Richtung (200) entlang der ersten Zuführleitung (100) so angeordnet ist, dass die erste Zuführleitung (100) in einen ersten (201) und zweiten (202) unterschiedlichen Pfad geteilt wird;
wobei der Splitter (103) einen beweglichen Arm (104) umfasst, wobei der besagte bewegliche Arm (104) gemäß einer Translation gemäß der ersten aufgeführten Richtung (200) beweglich ist, wobei der bewegliche Arm (104) so konfiguriert ist, dass er die Produkte (300-302) in den ersten (201) oder zweiten (202) differenzierten Pfad führt,
**gekennzeichnet dadurch, dass** der bewegliche Arm (104) ferner so konfiguriert ist, dass er sich so bewegt, dass eine Geschwindigkeit einer Translationsbewegung des beweglichen Arms (104) gemäß einem ersten Sinn entlang der ersten Richtung und gleich dem Sinn der Beförderung der Produkte (300-302) größer als die Geschwindigkeit einer Translationsbewegung des beweglichen Arms (104) entgegen dem ersten Sinn ist.

2. Vorrichtung nach Anspruch 1, wobei die Geschwindigkeit der Bewegung gemäß dem ersten Sinn gleich der Geschwindigkeit des Laufbandes ist.

3. Vorrichtung nach einem der vorhergehenden Ansprüche, wobei der bewegliche Arm (104) ein abgerundetes Ende umfasst, wobei das abgerundete Ende vorzugsweise aus polymerisiertem Polytetrafluorethylen besteht.

4. Vorrichtung nach einem der vorhergehenden Ansprüche, wobei die Vorrichtung ferner einen Hebel (101) umfasst, der an einer Kante der ersten Zuführleitung (100) angeordnet ist, wobei der Hebel (101) einen schmalen Arm (102) umfasst, der so angeordnet ist, dass er zwischen der ersten Richtung (200) und einer zweiten Richtung senkrecht zu der ersten Richtung (200) zu der ersten Zuführleitung (100) schwenkt, wobei der Hebel (101) so konfiguriert ist, dass er die Produkte (300-302) zu dem Splitter (103) führt, indem er den schmalen Arm (101) von der ersten Richtung (200) in die zweite Richtung schwenkt (102), wobei der schmale Arm (101) vorzugsweise aus polymerisiertem Polytetrafluorethylen besteht.

5. Vorrichtung nach Anspruch 4, wobei die Länge des schmalen Arms (101) kleiner als die Breite der ersten Zuführleitung (100) ist, vorzugsweise die Hälfte der Breite.

6. Vorrichtung nach Anspruch 4 oder 5, wobei der Gelenkpunkt des Hebels (101) so angeordnet ist, dass die Drehrichtung der ersten Richtung (200) zu der zweiten Richtung eine positive Drehrichtung zum ersten Sinn ist.

7. Vorrichtung nach einem der vorhergehenden Ansprüche, wobei die Vorrichtung ferner Folgendes umfasst:
- eine zweite Zuführleitung (603), die nach dem ersten (201) und zweiten (202) Pfad angeordnet ist und mit diesen verbunden ist; und
- ein Blockierungsmittel (500-502), das auf dem ersten (201) und dem zweiten (202) Pfad angeordnet ist;
wobei das Blockierungsmittel (500-502) so konfiguriert ist, dass es die Beförderung der Produkte (300-302) temporär und sequenziell pro Pfad (201-202) blockiert (503-504), so dass die Beförderung der Produkte (300-302) auf der zweiten Zuführleitung (603) gemäß einem versetzten Muster erfolgt.

8. Vorrichtung nach Anspruch 7, wobei das Blockierungsmittel (500-502) auch so konfiguriert ist, dass es die Blockierung (503-504) auslöst, nachdem eine vordefinierte Anzahl von Produkten das Blockierungsmittel (500-502) passiert hat, und wobei die zweite Zuführleitung (603) so konfiguriert ist, dass sie die vordefinierte Anzahl pro Pfad empfängt und stoppt.

9. Vorrichtung nach Anspruch 8, wobei die vordefinierte Anzahl für den ersten Pfad (201) eine Einheit mehr als die vordefinierte Anzahl für den zweiten (202) Pfad umfasst.

10. Vorrichtung nach einem der Ansprüche 8 bis 9, wobei die Vorrichtung ferner Folgendes umfasst:
- eine dritte Zuführleitung (604), die quer zu der zweiten Zuführleitung (603) angeordnet ist; und
- einen Schieber (610), der in Richtung der dritten Zuführleitung (603) beweglich ist; und
wobei der Schieber (610) so konfiguriert ist, dass er die Produkte (300-302) auf der zweiten Zuführleitung (603) gemäß dem versetzten Muster (700) zu der dritten Zuführleitung (604) bewegt.

11. Verwendung der Vorrichtung nach einem der Ansprüche 8 bis 10 für die Anordnung von Produkten (300-302), die auf einem Förderband nach einem versetzten Muster angeliefert werden, wobei die Anzahl von Reihen des versetzten Musters gleich der Anzahl der über den ersten Pfad (201) angelieferten Produkte ist.

12. Verfahren zum Führen von Produkten (300-302) auf einem Förderband mittels der Vorrichtung nach Anspruch 1, wobei das Verfahren die folgenden Schritte umfasst:
- Führen der Produkte (300-302) gemäß der ersten Zuführleitung (100); und
- Aufteilen der Produkte (300-302) auf den ersten (201) bzw. zweiten (202) unterschiedlichen Pfad unter Verwendung des Splitters der besagten Vorrichtung nach Anspruch 1; und
- das vorübergehende und sequentielle Blockieren der Produkte (300-302) in dem ersten (201) bzw. zweiten (202) unterschiedlichen Pfad, so dass die Produkte (300-302) auf der zweiten Zuführleitung (603) gemäß einem versetzten Muster (700) befördert werden.

13. Verfahren nach Anspruch 12, wobei das Verfahren ferner das Befördern von Produkten (300-302) am Rande der ersten Zuführleitung (100) zu dem Splitter (103) unter Verwendung eines Klapphebels (101) umfasst.

14. Verfahren nach einem der Ansprüche 12 und 13, wobei das Verfahren ferner die wiederholte Ausführung der folgenden Schritte umfasst:
- Stoppen einer vordefinierten Anzahl von Produkten (300-302) pro Pfad (201-202) auf der zweiten Zuführleitung (603), wobei die Anzahl der Produkte (300-302) für den ersten Pfad (201) eine Einheit mehr als für den zweiten Pfad (202) umfasst; und
- das Verschieben der gestoppten Produkte zu einer dritten Zuführleitung (604);
bis die Anzahl der zu der dritten Zuführleitung (604) verschobenen Produktreihen gleich der Anzahl der auf dem ersten Pfad (201) auf der zweiten Zuführleitung (603) gestoppten Produkte ist.

## Revendications

1. Dispositif de guidage de produits (300-302) sur une bande transporteuse, le dispositif comprenant :
- une première ligne d'alimentation (100) configurée pour le transport des produits (300-302) selon une première direction (200) ; et
- un répartiteur (103) installé selon la première direction (200) le long de la première ligne d'alimentation (100) de telle sorte que la première ligne d'alimentation (100) est divisée en un premier (201) et un deuxième (202) trajet différent ;
où le répartiteur (103) comprend un bras mobile (104), ledit bras mobile (104) étant mobile selon une translation selon la première direction répertoriée (200), le bras mobile (104) étant configuré pour guider les produits (300-302) vers le premier (201) ou le deuxième (202) trajet différencié,
**caractérisé en ce que** le bras mobile (104) est en outre configuré pour se déplacer de telle sorte qu'une vitesse d'un mouvement de translation du bras mobile (104) selon un premier sens le long de la première direction et égal au sens de transport des produits (300-302) est supérieure à la vitesse d'un mouvement de translation du bras mobile (104) contre ledit premier sens.

2. Dispositif selon la revendication 1, où la vitesse du mouvement selon le premier sens est égale à la vitesse de la bande en fonctionnement.

3. Dispositif selon l'une des revendications précédentes, où le bras mobile (104) comprend une extrémité arrondie, l'extrémité arrondie étant de préférence réalisé en polytétrafluoroéthylène polymérisé.

4. Dispositif selon l'une des revendications précédentes, le dispositif comprenant en outre un levier (101) placé sur un bord de la première ligne d'alimentation (100), le levier (101) comprenant un bras mince (102) placé pour s'articuler entre la première direction (200) et une deuxième direction perpendiculaire à la première direction (200) de la première ligne d'alimentation (100), le levier (101) est configuré pour guider les produits (300-302) vers le répartiteur (103) en articulant (102) le bras mince (101) de la première direction (200) à la deuxième direction, le bras mince (101) étant de préférence réalisé en polytétrafluoroéthylène polymérisé.

5. Dispositif selon la revendication 4, où la longueur du bras mince (101) est inférieure à la largeur de la première ligne d'alimentation (100), de préférence la moitié de la largeur.

6. Dispositif selon les revendications 4 ou 5, où le point d'articulation du levier (101) est installé de telle sorte que le sens de rotation de la première direction (200) vers la deuxième direction est un sens de rotation positif par rapport au premier sens.

7. Dispositif selon l'une quelconque des revendications précédentes, le dispositif comprenant en outre :
- une deuxième ligne d'alimentation (603) installée ensuite et se connectant au premier (201) et au deuxième (202) trajet ; et
- un agent de blocage (500-502) installé sur le premier (201) et le deuxième (202) trajet ;
où l'agent de blocage (500-502) est configuré pour bloquer (503-504) le transport des produits (300-302) temporairement et séquentiellement par trajet (201-202) de telle sorte que le transport des produits (300-302) continue sur la deuxième ligne d'alimentation (603) selon un modèle décalé.

8. Dispositif selon la revendication 7, où l'agent de blocage (500-502) est également configuré pour initier le blocage (503-504) après qu'un nombre prédéfini de produits passe l'agent de blocage (500-502), et où la deuxième ligne d'alimentation (603) est configurée pour recevoir le nombre prédéfini par trajet et pour les arrêter.

9. Dispositif selon la revendication 8, où le nombre prédéfini pour le premier trajet (201) comprend une unité de plus que le nombre prédéfini pour le deuxième trajet.

10. Dispositif selon l'une quelconque des revendications 8 à 9, le dispositif comprenant en outre :
- une troisième ligne d'alimentation (604) installée transversalement sur la deuxième ligne d'alimentation (603) ; et
- un curseur (610) mobile dans une direction de la troisième ligne d'alimentation (603) ; et
où le curseur (610) est configuré pour déplacer les produits (300-302) sur la deuxième ligne d'alimentation (603) selon le modèle décalé (700) vers la troisième ligne d'alimentation (604).

11. Utilisation du dispositif selon l'une des revendications 8 à 10 pour l'agencement de produits (300-302) livrés sur une bande transporteuse selon un modèle décalé, où le nombre de rangées du modèle décalé est égal au nombre de produits livrés via le premier trajet (201).

12. Procédé de guidage de produits (300-302) sur une bande transporteuse au moyen du dispositif selon la revendication 1, le procédé comprenant les étapes de :
- guider les produits (300-302) selon la première ligne d'alimentation (100) ; et
- répartir les produits (300-302) ver le premier (201) et le deuxième (202) trajet distinct en utilisant respectivement le répartiteur dudit dispositif selon la revendication 1 ; et
- le blocage temporaire et séquentiel des produits (300-302) dans le premier (201) et le deuxième (202) trajet distinct respectivement de sorte que les produits (300-302) sont transportés sur la deuxième ligne d'alimentation (603) selon un modèle décalé (700).

13. Procédé selon la revendication 12, le procédé comprenant en outre le transport de produits (300-302) au bord de la première ligne d'alimentation (100) vers le répartiteur (103) en utilisant un levier articulé (101).

14. Procédé selon l'une des revendications 12 et 13, le procédé comprenant en outre l'exécution répétitive des étapes de :
- arrêter un nombre prédéfini de produits (300-302) par trajet (201-202) sur la deuxième ligne d'alimentation (603), où le nombre de produits (300-302) pour le premier trajet (201) comprend une unité de plus que le deuxième trajet (202) ; et
- le déplacement des produits arrêtés vers une troisième ligne d'alimentation (604) ;
jusqu'à ce que le nombre de rangées de produits déplacés vers la troisième ligne d'alimentation (604) soit égal au nombre de produits sur le premier trajet (201) arrêtés sur la deuxième ligne d'alimentation (603).
